# EUROPÄISCHE PATENTANMELDUNG

(11) **EP 3 839 247 A1**
(43) Veröffentlichungstag der Anmeldung: **23.06.2021**
(21) Anmeldenummer: 19218970.2
(22) Anmeldetag: 20.12.2019
(51) Int. Cl.: F03D 3/02, F03D 3/00

(54) **WINDKRAFTMASCHINE MIT MEHREREN ROTORMODULEN UND ROTORMODUL FÜR EINE WINDKRAFTMASCHINE**

(71) Anmelder: WexTec GmbH, 34212 Melsungen (DE); Angersbach Metallbau GmbH, 34327 Körle-Lobenhausen (DE)
(72) Erfinder: ANGERSBACH, Kai, D-34327 Körle (DE); WEX, Roland, D-34212 Melsungen (DE)
(74) Vertreter: Franke, Markus

(57) **Zusammenfassung**

Die vorliegende Erfindung betrifft eine Windkraftmaschine (1) mit mehreren Rotormodulen (5) sowie ein Rotormodul (5) für eine Windkraftmaschine (1). Die Windkraftmaschine (1) weist eine drehbare Welle (2) zum Antreiben eines Generators (3) auf. Ferner weist die Windkraftmaschine (1) einen mit der Welle (2) zusammenwirkenden Rotor (4) auf, wobei der Rotor (4) mehrere in Axialrichtung (Z) der Welle (2) nacheinander angeordnete Rotormodule (5) aufweist.

## Beschreibung

Die vorliegende Erfindung betrifft eine Windkraftmaschine mit mehreren Rotormodulen sowie ein Rotormodul für eine Windkraftmaschine. Windkraftmaschinen bzw. Windkraftanlagen wandeln die kinetische Energie des Windes mittels eines Generators in elektrische Energie um. Neben Photovoltaikanlagen stellen Windkraftanlagen eine Möglichkeit dar, elektrischen Strom ohne die Nutzung von fossilen Energieträgern, wie beispielsweise Öl oder Gas, zu gewinnen.

Typische Windkraftanlagen weisen eine drehbare Welle zum Antreiben eines Generators sowie einen mit der Welle verbundenen Rotor auf, wobei die Gesamtheit von drehbarer Welle, Generator und Rotor häufig an der Spitze eines Turms befestigt ist, wobei dieser Turm durchaus über 100 m hoch sein kann. Eine derartige Windkraftanlage ist in der Regel derart ausgebildet, dass es sich bei dem Rotor um einen Horizontalrotor handelt, insofern eine Achse der drehbaren Welle im Wesentlichen in der horizontalen Richtung ausgebildet ist.

Nachteilig bei derartigen Windkraftanlagen ist, dass diese Windkraftanlagen sehr groß dimensioniert sind und entsprechend viel Schlagschatten, Geräusche und Platz für das Fundament benötigen. In der Regel sind auch die Genehmigungsverfahren sowie der Montage- und Wartungsaufwand derartiger Windkraftanlagen mit hohem Aufwand verbunden. Ferner ist es bei Horizontalläufern notwendig, zur optimalen Ausnutzung der Windenergie den Rotor nachzuführen, also entsprechend der Windrichtung auszurichten.

Aufgabe der vorliegenden ist es, eine Windkraftmaschine bereitzustellen, die sich durch eine besonders einfache Montage, eine einfache Anpassung und eine universelle Einsetzbarkeit, insbesondere auch im Bereich von Wohngebieten auszeichnet. Insbesondere ist es Aufgabe der Erfindung, eine Windkraftmaschine in Form einer Kleinwindkraftanlage zu schaffen, die eine einfache Nachrüstung von bereits bestehenden Gebäuden mit einer derartigen Windkraftmaschine ermöglicht. In einem weiteren Aspekt soll die Windkraftmaschine zur Montage auf einem Hausdach geeignet sein.

Diese Aufgabe wird durch eine Windkraftmaschine, die die Merkmale des Patentanspruchs 1 aufweist, gelöst. Ferner wird die Aufgabe durch einen Rotormodul gelöst, das die Merkmale des Patentanspruchs 15 aufweist.

Die erfindungsgemäße Windkraftmaschine weist eine drehbare Welle zum Antreiben eines Generators sowie einen mit der Welle zusammenwirkenden Rotor auf, wobei der Rotor mehrere in Axialrichtung der Welle nacheinander angerordnete Rotormodule aufweist.

Durch die modulare Bauweise des Rotors, der mehrere, somit zumindest zwei, in Axialrichtung der Welle nacheinander angeordnete Rotormodule aufweist, kann der Rotor in einfacher Art und Weise an die Gegebenheiten des Einsatzorts angepasst werden. So kann durch die modulare Bauweise des Rotors beispielsweise die axiale Ausdehnung des Rotors, die radiale Ausdehnung des Rotors und/oder die Gestalt des Rotors in einfacher Art und Weise an die Gegebenheiten des Einsatzortes angepasst werden. Zudem ist eine Montage des Rotors und somit der Windkraftmaschine dahingehend erleichtert, dass aufgrund der modularen Bauweise des Rotors der Rotor gegebenenfalls erst unmittelbar am Aufstellungsort der Windkraftmaschine zusammengebaut wird. Aufgrund der modularen Bauweise des Rotors muss somit nicht der gesamte Rotor als Einheit montiert und transportiert werden, sondern es können stattdessen die Rotormodule nacheinander, quasi schrittweise, montiert werden. Im Gegensatz zur Handhabung des gesamten Rotors ist die Handhabung der einzelnen Rotormodule aufgrund der gegenüber dem Gesamtrotor geringeren Abmessungen der Rotormodule und des geringeren Gewichts der Rotormodule erleichtert. Es ist durchaus denkbar, dass aufgrund der Verwendung von mehreren Rotormodulen nur kleinere oder sogar gar keine Kranfahrzeuge bzw. Kräne zwecks der Montage der Windkraftmaschine benötigt werden. Zudem kann die erfindungsgemäße Windkraftmaschine besonders schnell und einfach montiert und demontiert werden, wodurch sich diese besonders gut für einen zeitlich begrenzten Einsatz eignet, bspw. bei einer zeitlich begrenzten Veranstaltung.

Die modulare Bauweise des Rotors ermöglicht es ferner, in einfacher Art und Weise auf Veränderungen im Umfeld der Windkraftmaschine zu reagieren. So ist es durchaus denkbar, die Gestalt des Rotors nach erfolgter Montage zu verändern, beispielsweise den Rotor zu vergrößern, indem zusätzliche Rotormodule auf den bestehenden Rotor montiert werden oder Rotormodule des Rotors ausgetauscht werden. Die Verwendung von Rotormodulen ist auch dahingehend vorteilhaft, dass eine Beschädigung am Rotor in einfacher Art und Weise und besonders zeitsparend sowie kostengünstig beseitigt werden kann, indem lediglich das beschädigte Rotormodul ausgetauscht wird.

Die erfindungsgemäße Windkraftmaschine ist insbesondere als Kleinwindkraftanlage ausgebildet.

Die einzelnen Rotormodule sind insbesondere lösbar mit der Welle und/oder lösbar miteinander verbunden.

Vorzugsweise sind die Rotormodule kraftschlüssig mit der Welle verbunden und/oder untereinander verbunden. Zu diesem Zweck ist es durchaus denkbar, dass die Windkraftmaschine ein Spannelement aufweist, zum Verspannen der Rotormodule gegen die Welle und/oder untereinander.

Es ist aber auch durchaus denkbar, dass die Rotormodule formschlüssig mit der Welle verbunden sind. In diesem Zusammenhang ist es durchaus denkbar, dass die Welle eine axiale Nut aufweist, wobei das Rotormodul ein mit der Nut zusammenwirkendes Formschlusselement aufweist, oder umgekehrt, das jeweilige Rotormodul eine axiale Nut aufweist, wobei die Welle ein mit der Nut zusammenwirkendes Formschlusselement aufweist.

Als besonders vorteilhaft wird es angesehen, wenn das jeweilige Rotormodul eine Durchgangsöffnung aufweist, wobei die Welle die mehreren Rotormodule durchsetzt. Eine derartige Gestaltung ist insbesondere hinsichtlich einer vereinfachten Montage als vorteilhaft anzusehen, da die Welle durch die Rotormodule durchgesteckt werden kann bzw. die Rotormodule auf die Welle aufgesteckt werden können.

In einer bevorzugten Ausführungsform der Windkraftmaschine weist das jeweilige Rotormodul zumindest zwei Rotorflügel auf.

Das Rotormodul ist insbesondere rotationssymmetrisch zur Drehachse der Welle ausgebildet, wobei die Zähligkeit dieser Rotationssymmetrie größer als 1 ist, insbesondere die Zähligkeit der Anzahl der Rotorflügel entspricht.

Als besonders vorteilhaft wird es angesehen, wenn die Welle mehrere in Axialrichtung der Welle nacheinander angeordnete Wellenmodule aufweist, vorzugsweise dem jeweiligen Rotormodul genau ein Wellenmodul zuordenbar ist. Durch die zusätzliche modulare Gestaltung der Welle ist zum einen die Montage der Windkraftmaschine erleichtert und es kann in einfacher Art und Weise eine Anpassung der Welle an die Gestaltung und Anzahl der verwendeten Rotormodule erfolgen. Ferner ist durch die modulare Gestaltung der Welle ein Nachrüsten von Rotormodulen und/oder ein Austausch von Rotormodulen ermöglicht, ohne dass die gesamte Welle ausgetauscht werden muss. Bspw. kann bei der Erweiterung um ein Rotormodul dementsprechend auch die Welle um ein Wellenmodul erweitert werden.

Als besonders vorteilhaft wird es angesehen, wenn die Wellenmodule lösbar miteinander verbunden sind, insbesondere ineinander eingeschraubt sind.

Ferner wird es als vorteilhaft angesehen, wenn das jeweilige Wellenmodul das jeweilige Rotormodul in Axialrichtung durchsetzt.

Es ist durchaus denkbar, dass die Wellenmodule drehfest miteinander verbunden sind, vorzugsweise miteinander verschraubt sind. Dabei wird es als besonders vorteilhaft angesehen, wenn das jeweilige Wellenmodul eine Verbindungsstruktur, beispielsweise ein Gewinde oder einen Bestandteil eines Bajonettverschlusses, aufweist und ein angrenzendes Wellenmodul eine zu der Verbindungsstruktur korrespondierende Gegenstruktur, beispielsweise ein Gegengewinde oder den anderen Bestandteil des Bajonettverschlusses, aufweist. Dadurch sind die Wellenmodule in besonders einfacher Art und Weise miteinander verbindbar bzw. voneinander lösbar.

In einer vorteilhaften Ausführungsform der Windkraftmaschine weist das Rotormodul eine Lagerstruktur auf, wobei Rotorflügel des Rotormoduls in der Lagerstruktur gelagert sind. Als besonders vorteilhaft wird es angesehen, wenn die Rotorflügel in der Lagerstruktur befestigt sind.

Hinsichtlich der Lagerstruktur wird es als besonders vorteilhaft angesehen, wenn die Lagerstruktur ein erstes Lagerstrukturelement und ein zweites Lagerstrukturelement aufweist, wobei das erste und das zweite Lagerstrukturelement in Axialrichtung beabstandet sind und die Rotorflügel des Rotormoduls in dem Zwischenbereich zwischen den beiden Lagerstrukturelementen angeordnet sind. Durch die Verwendung von zwei in axialer Richtung beabstandeten Lagerstrukturelementen sind die Rotorflügel besonders sicher und stabil gelagert. Ferner geben die beiden Lagerstrukturelemente dem jeweiligen Rotormodul eine besonders hohe Formstabilität, sodass die Rotormodule besonders einfach und sicher gehandhabt werden können, insofern eine Verformung bzw. Beschädigung der Rotormodule bei deren Handhabung, beispielsweise bei der Montage des Rotors, vermieden wird.

Hinsichtlich der Stabilität des einzelnen Rotormoduls wird es als besonders vorteilhaft angesehen, wenn die Lagerstruktur eine Stützhülse zum axialen Versteifen der Lagerstruktur aufweist. Vorzugsweise durchsetzt die Welle, insbesondere das dem Rotormodul zugeordnete Wellenmodul, die Stützhülse.

Es ist durchaus denkbar, dass die Stützhülse die Lagerstrukturelemente in der axialen Richtung durchsetzt. Die Stützhülse kann ferner einen umlaufenden Vorsprung aufweisen, wobei dieser Vorsprung dem axialen Abstützen des ersten oder des zweiten Lagerstrukturelements dient. Vorzugsweise weist die Stützhülse zwei umlaufende Vorsprünge zum Abstützen des jeweiligen Lagerstrukturelements auf.

Hinsichtlich der Stützhülse ist es durchaus denkbar, dass die Stützhülse mehrteilig ausgebildet ist. So kann die Stützhülse ein rohrförmiges Element aufweisen, wobei jeweils endseitig an dem rohrförmigen Element Endelemente angeordnete sind, die beispielsweise den jeweiligen umlaufenden Vorsprung aufweisen.

Als besonders vorteilhafte hinsichtlich der Stabilität des Rotors und der Montage des Rotors wird es angesehen, wenn die Lagerstruktur eines Rotormoduls der Rotormodule eine Zentrierstruktur aufweist und die Lagerstruktur eines dem einen Rotormodul benachbarten Rotormoduls eine zu der Zentrierstruktur korrespondierende Gegenstruktur aufweist. In diesem Zusammenhang wird es als besonders vorteilhaft angesehen, wenn die Stützhülse des einen Rotormoduls die Zentrierstruktur aufweist und/oder die Stützhülse des benachbarten Rotormoduls die Gegenstruktur aufweist. Hinsichtlich der Zentrierstruktur und der Gegenstruktur ist es durchaus denkbar, dass die Endelemente einer mehrteiligen Stützhülse die entsprechenden Strukturen aufweisen.

In einer bevorzugten Ausführungsform der Windkraftmaschine ist vorgesehen, dass das erste Lagerstrukturelement und/oder das zweite Lagerstrukturelement einen umlaufenden Ring, vorzugsweise einen umlaufenden Kreisring, und mehrere mit dem umlaufenden Ring verbundene, vom Ring nach radial innen verlaufende Stege aufweist. Eine derartige Gestaltung des Lagerstrukturelements bzw. der Lagerstrukturelemente zeichnet sich durch einen besonders geringen Materialbedarf und somit ein besonders geringes Gewicht, bei dennoch hoher Formstabilität aus. Hinsichtlich einer derartigen Gestaltung wird es als besonders vorteilhaft angesehen, wenn die Rotorflügel im Bereich der Stege mit dem Lagerstrukturelement verbunden sind. Vorzugsweise ist mit jedem Steg des ersten und/oder des zweiten Lagerelements ein Rotorflügel verbunden.

Es wird als besonders vorteilhaft angesehen, wenn das erste und/oder das zweite Lagerstrukturelement eine Vielzahl von einteiligen, identisch ausgebildeten Komponenten aufweist, wobei die jeweilige Komponente zumindest einen Steg der Stege und ein mit dem Steg verbundenes Kreisringsegment des umlaufenden Rings bildet. Dadurch kann das jeweilige Lagerstrukturelement im Wesentlichen aus Gleichteilen gefertigt werden, was sich vorteilhaft auf die Fertigungskosten auswirkt. Ferner kann ein relativ großes Lagerstrukturelement aus einer Vielzahl von relativ kleinen Komponenten hergestellt werden, wodurch entsprechend kleinere Werkzeuge und entsprechend kleinere Ausgangsmaterialien zur Herstellung der Lagerstrukturelemente verwendet werden können.

Als besonders vorteilhaft wird es angesehen, wenn der Rotor als Vertikalrotor ausgebildet ist. Ein Vertikalrotor hat sich insbesondere bei der Verwendung der Windkraftmaschine auf einem Hausdach als vorteilhaft erwiesen, da bei relativ kleiner Dimensionierung des Rotors und auch bei kleinen Windgeschwindigkeiten eine hohe Ausbeute an elektrischer Energie erzielt werden kann.

Als besonders vorteilhaft wird es angesehen, wenn der Rotor zumindest zwei unterschiedlich ausgebildete Rotormodule aufweist.

Die unterschiedlichen Rotormodule können sich insbesondere in ihrer radialen Erstreckung und/oder in der Anzahl der Rotorflügel und/oder in der Anordnung der Rotorflügel und/oder in der axialen Erstreckung unterscheiden.

Durch die Verwendung einer Vielzahl von unterschiedlich ausgebildeten Rotormodulen können die unterschiedlichsten Gestaltungen von Rotoren verwirklicht werden.

Als besonders vorteilhaft wird es angesehen, wenn die Rotormodule des Rotors derart ausgebildet und angeordnet sind, dass der Rotor eine Außenkontur aufweist, die sich in axialer Richtung verändert. Insbesondere weist der Rotor eine im Wesentlichen kugelförmige oder kreiskegelförmige oder ellipsoidförmige oder urnenförmige Außenkontur auf. Es ist aber auch durchaus denkbar, dass der Rotor eine teilkugelförmige oder teilkreiskugelförmige oder teilellipsoidförmige oder teilurnenförmige Außenkontur aufweist.

Hinsichtlich einer optimalen Ausnutzung der Windenergie wird es als vorteilhaft angesehen, wenn die Rotorflügel des Rotormoduls derart ausgebildet sind, dass bei einer Projektion des Rotormoduls in der radialen Richtung ein radial innerer Bereich frei von einer Abdeckung durch die Rotorflügel ist. Eine derartige Gestaltung begünstigt, dass in einem zentral innenliegenden Bereich des Rotormoduls ein freies Strömen von Luft von einer Seite der Welle auf die gegenüberliegende Seite der Welle möglich ist.

In einer bevorzugten Ausführungsform weisen die Rotorflügel des Rotormoduls jeweils einen radial innersten und einen radial äußersten Punkt auf, wobei ein Verhältnis eines Abstands des radial innersten Punkt von der Drehachse der Welle zu einem Abstand des radial äußersten Punkts von der Drehachse der Welle zwischen 0,25 und 0,5 beträgt.

Vorzugsweise weist zumindest eines der Rotormodule eine im Wesentlichen kreiszylindrische Außenkontur auf. Diese Gestaltung hat sich hinsichtlich der Handhabung des Rotormoduls und Gestaltungsmöglichkeiten des Rotors als vorteilhaft erwiesen. Es ist aber auch durchaus denkbar, dass zumindest eines der Rotormodule als Kugelrotor ausgebildet ist.

Es wird als besonders vorteilhaft angesehen, wenn axial beabstandete Stirnflächen der Außenkontur des Rotormoduls jeweils eine ebene Fläche bilden, vorzugsweise die Stirnflächen parallel ausgebildet sind.

Vorzugsweise beträgt ein Verhältnis der axialen Erstreckung zu der radialen Erstreckung des Rotormoduls zumindest 1 zu 3, vorzugsweise zumindest 1 zu 4, insbesondere von 1 zu 3 bis 1 zu 8. Diese Größenverhältnisse haben sich hinsichtlich einer Handhabbarkeit des Rotormoduls als vorteilhaft erwiesen.

In einer bevorzugten Ausführungsform der Windkraftmaschine sind die Rotorflügel der mehreren Rotormodule identisch ausgebildet. Dadurch können bei der Herstellung der unterschiedlichen Rotormodule dieselben Rotorflügel, somit Gleichteile verwendet werden.

In einer bevorzugten Ausführungsform weist der Rotor zumindest drei und maximal zehn Rotormodule auf.

Hinsichtlich einer besonders hohen Formstabilität des aus den Rotormodulen aufgebauten Rotors und einer besonders hohen Laufruhe des Rotors hat es sich als vorteilhaft erwiesen, wenn zwischen benachbarten Rotormodulen ein Abstandshalter angeordnet ist, insbesondere ein ringförmiger Abstandshalter angeordnet ist.

Hinsichtlich einer besonders hohen Effizienz des Rotors hat es sich als vorteilhaft erwiesen, wenn die Rotorflügel derart gestaltet sind, dass in einer ersten Schnittebene senkrecht zu der axialen Richtung der Rotorflügel eine gekrümmte Kurve beschreibt und/oder in einer zweiten Schnittebene senkrecht zu der radialen Richtung der Rotorflügel eine gekrümmte Kurve beschreibt. Dabei ist es durchaus denkbar und bevorzugt, dass der Rotorflügel in der ersten und/oder zweiten Schnittebene kreisförmig gekrümmt ist.

Es ist durchaus denkbar, dass der Rotorflügel die Form einer Außenfläche eines Torus aufweist. Als besonders vorteilhaft wird es angesehen, wenn der Rotorflügel gleichsinnig gekrümmt ist, insbesondere schalenartig oder löffelartig gekrümmt ist.

Die erfindungsgemäße Windkraftmaschine ist insbesondere zur dezentralen Produktion von elektrischer Energie geeignet. Die erfindungsgemäße Windkraftmaschine zeichnet sich durch eine relativ kleine Bauweise aus und ermöglicht eine besonders einfache Montage. Die erfindungsgemäße Windkraftmaschine eignet sich insbesondere für eine Dachmontage, da die Windkraftmaschine bei dennoch hoher Effizienz eine relativ geringe Bauhöhe aufweisen kann, sodass beispielsweise eine Gesamthöhe von 10 m über der Grundstücksfläche bei dennoch hoher Energieausbeute möglich ist.

Ferner zeichnet sich die erfindungsgemäße Windkraftmaschine durch eine niedrige Geräuschentwicklung und keinem oder nur geringem Schlagschatten aus. Die erfindungsgemäße Windkraftmaschine eignet sich sowohl für die Dachmontage als auch für die Freilandmontage mit Einzel- und Gruppenaufstellung.

Insbesondere ist vorgesehen, dass die Windkraftmaschine im Wesentlichen aus recyclingfähigen Materialien gefertigt ist. Insbesondere ist vorgesehen, dass die Rotormodule aus Blech gefertigt sind.

In den nachfolgenden Figuren ist die Erfindung anhand eines Ausführungsbeispiels näher erläutert, ohne hierauf beschränkt zu sein.

Es zeigen:
- Fig. 1: eine Ausführungsform der Windkraftmaschine in einer perspektivischen Ansicht,
- Fig. 2: die Windkraftmaschine gemäß Fig. 1 in einer Seitenansicht,
- Fig. 3: ein Rotormodul eines Rotors der Windkraftmaschine gemäß Fig. 1 in einer perspektivischen Ansicht,
- Fig. 4: das Rotormodul gemäß Fig. 3 in einer Ansicht gemäß dem Pfeil IV in Fig. 5,
- Fig. 5: das Rotormodul in einer Ansicht gemäß dem Pfeil V in Fig. 4,
- Fig. 6: ein Wellenmodul der Windkraftmaschine gemäß Fig. 1,
- Fig. 7: eine Komponente einer Lagerstruktur des Rotormoduls gemäß Fig. 3.

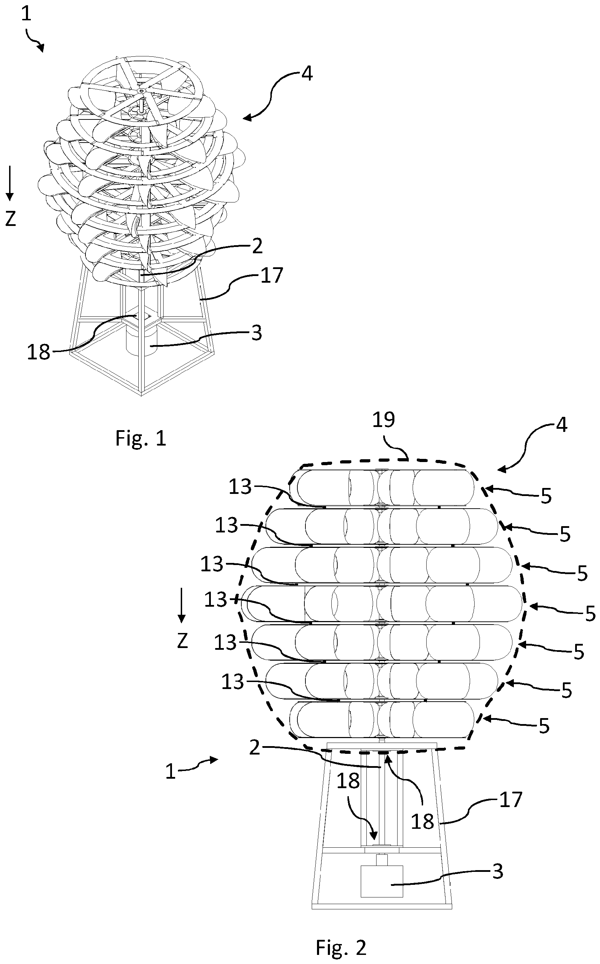

Die Figuren 1 bis 7 zeigen eine Ausführungsform der erfindungsgemäßen Windkraftmaschine 1 bzw. Bestandteile der erfindungsgemäßen Windkraftmaschine 1. Bei der in den Figuren dargestellten Ausführungsform der Windkraftmaschine 1 handelt es sich um eine Kleinwindkraftanlage, die insbesondere zur Montage auf Gebäudedächern geeignet ist. Die Windkraftmaschine 1 weist ein Gestell 17 sowie einen in dem Gestell 17 gelagerten Generator 3 auf, der mit einer in dem Gestell 17 drehbar gelagerten Welle 2 antreibbar ist.

Vorliegend weist die Windkraftmaschine 1 zwei in Axialrichtung Z beabstandet angeordnete Lagereinheiten 18 auf, die in dem Gestell 17 gelagert sind und der Lagerung der Welle 2 dienen. Die Windkraftmaschine 1 weist ferner einen mit der Welle 2 zusammenwirkenden Rotor 4 auf, wobei der Rotor 4 mehrere in der Axialrichtung Z der Welle 2 nacheinander angeordnete Rotormodule 5 aufweist. Vorliegend weist der Rotor 4 genau sieben Rotormodule 5 auf. Die Rotormodule 5 sind drehmomentübertragend mit der Welle 2 verbunden, wobei vorliegend die drehmomentübertragende Verbindung zwischen den Rotormodulen 5 und der Welle 2 durch einen Kraftschluss verwirklicht ist. Aufgrund der modularen Bauweise des Rotors 4 kann die Windkraftmaschine 1 besonders einfach an die Gegebenheiten vor Ort, insbesondere den zur Verfügung stehenden Platz, angepasst werden. Ferner erleichtert die modulare Bauweise des Rotors 4 die Montage der Windkraftmaschine 1, insbesondere, wenn diese auf einem Hausdach montiert werden soll.

Vorliegend weist der Rotor 4 drei Paare von identisch ausgebildeten Rotormodulen 5 auf. Insofern weist der Rotor 4 vier unterschiedliche Gestaltungen von Rotormodulen 5 auf. Die unterschiedlich ausgebildeten Rotormodule 5 sind im Wesentlichen flach ausgebildet, weisen somit eine radiale Erstreckung auf, die wesentlich größer ist als die axiale Erstreckung. Das jeweilige Rotormodul 5 weist eine im Wesentlichen kreiszylinderförmige Außenkontur auf. Die unterschiedlich ausgebildeten Rotormodule 5 unterscheiden sich vorliegend im Wesentlichen durch ihre radiale Erstreckung.

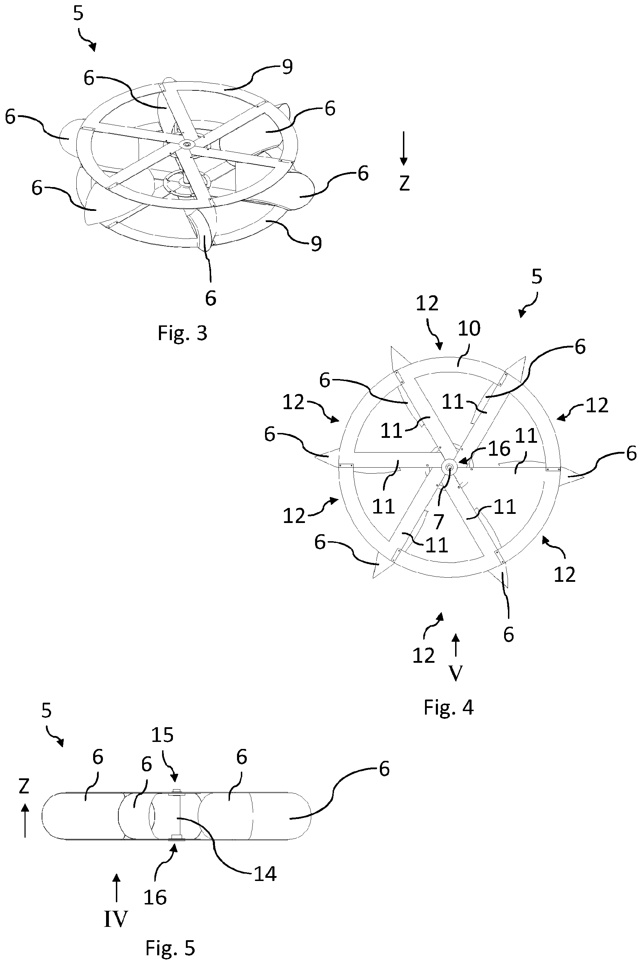

Das jeweilige Rotormodul 5 weist eine Vielzahl von Rotorflügeln 6 auf, nämlich vorliegend jeweils genau sechs Rotorflügel 6 auf. Die Rotorflügel 6 des Rotormoduls 5 sind derart ausgebildet, dass bei einer Projektion des Rotormoduls 5 in der radialen Richtung ein radial innerer Bereich frei von einer Abdeckung durch Rotorflügel 6 ist. Dies ist insbesondere den Figuren 3 bis 5 zu entnehmen, die ein exemplarisches Rotormodul 5 des Rotors 4 zeigen. In einer ersten Schnittebene senkrecht zu der axialen Richtung Z beschreibt der jeweilige Rotorflügel 6 eine gekrümmte Kurve und in einer zweiten Schnittebene senkrecht zu einer radialen Richtung beschreibt der Rotorflügel 6 ebenfalls eine gekrümmte Kurve, wobei vorliegend der Rotorflügel 6 gleichsinnig gekrümmt ist und insofern schalenartig ausgebildet ist.

Das jeweilige Rotormodul 5 weist eine Lagerstruktur auf, wobei die Lagerstruktur ein erstes Lagerstrukturelement 9 und ein zweites Lagerstrukturelement 9 aufweist, wobei das erste und das zweite Lagerstrukturelement 9 in Axialrichtung Z beabstandet angeordnet sind. Zwischen den beiden beabstandeten Lagerstrukturelementen 9 sind die Rotorflügel 6 des Rotormoduls 5 angeordnet. Das erste Lagerstrukturelement 9 und das zweite Lagerstrukturelement 9 sind im Wesentlichen identisch ausgebildet und weisen einen umlaufenden Ring 10 und mehrere mit dem umlaufenden Ring 10 verbundene, vom Ring 10 nach radial innen verlaufende Stege 11 auf, wobei die Rotorflügel 6 im Bereich der Stege 11 mit dem jeweiligen Lagerstrukturelement 9 verbunden sind.

Die Lagerstruktur weist ferner eine Stützhülse 14 zum axialen Versteifen der Lagerstruktur auf, wobei sich die Stützhülse 14 zwischen den beiden Lagerstrukturelementen 9 erstreckt. Die Stützhülse 14 weist jeweils endseitig eine Zentrierstruktur 15 und eine zu der Zentrierstruktur 15 korrespondierende Gegenstruktur 16 auf. Die jeweilige Zentrierstruktur 15 bzw. Gegenstruktur 16 ist insbesondere mit dem zugeordneten Lagerstrukturelement 9 verschraubt. Die Zentrierstruktur 15 und die korrespondierende Gegenstruktur 16 erleichtern die Montage des Rotors 4, insofern den Aufbau des Rotors 4 aus mehreren Rotormodulen 5, da die Zentrierstruktur 15 des einen Rotormoduls 5 mit der Gegenstruktur 16 des benachbarten Rotormoduls 5 in Eingriff gebracht werden kann, wodurch die exakte Ausrichtung der Rotormodule 5 zueinander erleichtert wird. Ferner stabilisieren die Strukturen den Rotor 4.

Bei der in den Figuren dargestellten Ausführungsform der Windkraftmaschine 1 ist nicht nur der Rotor 4 in modularer Bauweise ausgeführt, sondern auch die Welle 2.

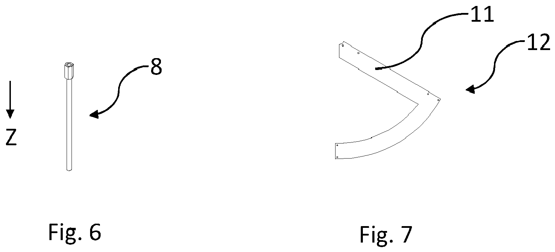

Zu diesem Zweck weist die Welle 2 mehrere in Axialrichtung Z der Welle 2 nacheinander angeordnete Wellenmodule 8 auf, wobei dem jeweiligen Rotormodul 5 genau ein Wellenmodul 8 zuordenbar ist. Vorliegend sind die den Rotormodulen 5 zuordenbaren Wellenmodule 8 identisch ausgebildet. Ein derartiges Wellenmodul 8 ist in der Fig. 6 separat dargestellt. Ferner weist die Welle 2 ein generatorseitiges Wellenmodul auf, welches eine andere Gestaltung als die den Rotormodulen 5 zugeordneten Wellenmodule 8 aufweist. Das dem jeweiligen Rotormodul 5 zugeordnete Wellenmodul 8 weist eine Verbindungsstruktur in Form eines Außengewindes und eine zu der Verbindungsstruktur korrespondierende Gegenstruktur in Form eines Innengewindes auf. Die Verbindungsstruktur und die Gegenstruktur sind jeweils an einem axialen Ende des Wellenmoduls 8 ausgebildet. Die Wellenmodule 8 sind über die Verbindungsstruktur und die Gegenstruktur lösbar miteinander verbunden, vorliegend miteinander verschraubt. Das generatorseitige Wellenmodul ist ebenfalls mit dem angrenzenden Wellenmodul 8 verschraubt.

Das jeweilige Rotormodul 5 weist eine Durchgangsöffnung 7 auf, wobei diese Durchgangsöffnung 7 vorliegend durch die Stützhülse 14 gebildet ist. Die Welle 2 durchsetzt die mehreren Rotormodule 5, wobei vorliegend das dem jeweiligen Rotormodul 5 zugeordnete Wellenmodul 8 das jeweilige Rotormodul 5 durchsetzt.

Die modulare Bauweise des Rotors 4 und die modulare Bauweise der Welle 2 ermöglichen es, den Rotor 4 schrittweise aufzubauen, indem nacheinander die einzelnen Rotormodule 5 und die einzelnen Wellenmodule 8 montiert werden. Da die Handhabung der einzelnen Rotormodule 5 und der einzelnen Wellenmodule 8 einfacher ist, als die Handhabung des gesamten Rotors 4 bzw. der gesamten Welle 2 kann auf mechanische Hilfsmittel, wie beispielsweise einen Kran, verzichtet werden oder zumindest können geringer dimensionierte mechanische Hilfsmittel verwendet werden.

Wie insbesondere der Figur 2 zu entnehmen ist, ist zwischen benachbarten Rotormodulen 5 ein als Ring ausgebildeter, konzentrisch zur Welle 2 positionierter Abstandshalter 13 angerordnet, wobei der Abstandshalter 13 insbesondere der Stabilisierung der Rotormodule 5 zueinander dient.

Durch die Verwendung von Rotormodulen 5 ist hinsichtlich der Gestaltung des Rotors 4 eine große Variabilität möglich. Durch Gestaltung der einzelnen Rotormodule 5 und deren Anordnung können unterschiedlich gestaltete Rotoren 4 in einfacher Art und Weise verwirklicht werden. Vorliegend sind die Rotormodule 5 derart ausgebildet und angeordnet, dass der Rotor 4 eine Außenkontur 19 aufweist, die sich in Axialrichtung Z verändert, wobei vorliegend der Rotor 4 eine teilellipsoidförmige Außenkontur 19 aufweist, wie dies insbesondere den Figuren 1 und 2 entnehmbar ist.

Vorliegend weist das jeweilige Lagerstrukturelement 9 eine Vielzahl von einteiligen, identisch ausgebildeten Komponenten 12 auf, wobei die jeweilige Komponente 12 einen Steg 11 der Stege und ein mit dem Steg 11 verbundenes Kreisringsegment des umlaufenden Kreisrings 10 bildet. Das erste Lagerstrukturelement 9 bzw. das zweite Lagerstrukturelement 9 kann dann in einfacher Art und Weise dadurch gebildet werden, dass die Komponenten 12 miteinander verbunden werden, beispielsweise verschraubt werden. Die Herstellung des jeweiligen Lagerstrukturelements 9 aus mehreren Komponenten 12 hat sich als besonders vorteilhaft hinsichtlich eines geringen Verschnitts erwiesen, da die einzelnen Komponenten 12 besonders effizient miteinander verschachtelt werden können, somit bei einem Blechteil der Verschnitt besonders gering ist.

### Bezugszeichenliste

- 1: Windkraftanlage
- 2.: Welle
- 3: Generator
- 4: Rotor
- 5: Rotormodul
- 6: Rotorflügel
- 7: Durchgangsöffnung
- 8: Wellenmodul
- 9: Lagerstrukturelement
- 10: Ring
- 11: Steg
- 12: Komponente
- 13: Abstandshalter
- 14: Stützhülse
- 15: Zentrierstruktur
- 16: Gegenstruktur
- 17: Gestell
- 18: Lagereinheit

## Patentansprüche

1. Windkraftmaschine (1), insbesondere Kleinwindkraftanlage, aufweisend eine drehbare Welle (2) zum Antreiben eines Generators (3) sowie aufweisend einen mit der Welle (2) zusammenwirkenden Rotor (4), wobei der Rotor (4) mehrere in Axialrichtung (Z) der Welle (2) nacheinander angeordnete Rotormodule (5) aufweist.

2. Windkraftmaschine nach Anspruch 1, wobei das jeweilige Rotormodul (5) eine Durchgangsöffnung (7) aufweist, wobei die Welle (2) die mehreren Rotormodule (5) durchsetzt.

3. Windkraftmaschine nach Anspruch 1 oder 2, wobei das jeweilige Rotormodul (5) zumindest zwei Rotorflügel (6) aufweist.

4. Windkraftmaschine nach einem der vorigen Ansprüche, wobei die Welle (2) mehrere in Axialrichtung (Z) der Welle (2) nacheinander angeordnete Wellenmodule (8) aufweist, vorzugsweise dem jeweiligen Rotormodul (5) genau ein Wellenmodul (8) zuordenbar ist.

5. Windkraftmaschine nach einem der vorigen Ansprüche, wobei das Rotormodul (5) eine Lagerstruktur aufweist, wobei Rotorflügel (6) des Rotormoduls (5) in der Lagerstruktur gelagert sind, insbesondere in der Lagerstruktur befestigt sind.

6. Windkraftmaschine nach Anspruch 5, wobei die Lagerstruktur ein erstes Lagerstrukturelement (9) und ein zweites Lagerstrukturelement (9) aufweist, wobei das erste und das zweite Lagerstrukturelement (9) in Axialrichtung (Z) beabstandet sind und die Rotorflügel (6) des Rotormoduls (5) in dem Zwischenbereich zwischen den beiden Lagerstrukturelementen (9) angeordnet sind.

7. Windkraftmaschine nach Anspruch 6, wobei die Lagerstruktur eine Stützhülse (14) zum axialen Versteifen der Lagestruktur aufweist, wobei die Welle (2), insbesondere das dem Rotormodul (5) zugeordnete Wellenmodul (8), die Stützhülse (14) durchsetzt.

8. Windkraftmaschine nach einem der Ansprüche 5 bis 7, wobei die Lagerstruktur eines Rotormoduls (5) der Rotormodule (5) eine Zentrierstruktur (15) und die Lagerstruktur eines dem einen Rotormodul (5) benachbarten Rotormoduls (5) eine zu der Zentrierstruktur (15) korrespondierende Gegenstruktur (16) aufweist, vorzugsweise die Stützhülse (14) des einen Rotormoduls (5) die Zentrierstruktur (15) und/oder die Stützhülse (14) des benachbarten Rotormoduls (5) die Gegenstruktur (16) aufweist.

9. Windkraftmaschine nach Anspruch 6 bis 8, wobei das erste Lagerstrukturelement (9) und/oder das zweite Lagerstrukturelement (9) einen umlaufenden Ring (10), vorzugsweise einen umlaufenden Kreisring, und mehrere mit dem umlaufenden Ring (10) verbundene, vom Ring (10) nach radial innen verlaufende Stege (11) aufweist, vorzugsweise die Rotorflügel (6) im Bereich der Stege (11) mit dem Lagerstrukturelement (9) verbunden sind.

10. Windkraftmaschine nach Anspruch 9, wobei das erste und/oder das zweite Lagerstrukturelement (9) eine Vielzahl von einteiligen, identisch ausgebildeten Komponenten (12) aufweist, wobei die jeweilige Komponente (12) zumindest einen Steg (11) der Stege (11) und ein mit dem Steg (11) verbundenes Kreisringsegment des umlaufenden Rings (10) bildet.

11. Windkraftmaschine nach einem der vorigen Ansprüche, wobei der Rotor (4) als Vertikalrotor ausgebildet ist.

12. Windkraftmaschine nach einem der vorigen Ansprüche, wobei der Rotor (4) zumindest zwei unterschiedlich ausgebildete Rotormodule (5) aufweist.

13. Windkraftmaschine nach Anspruch 12, wobei die Rotormodule (5) derart ausgebildet und angeordnet sind, dass der Rotor (2) eine Außenkontur (19) aufweist, die sich in Axialrichtung (Z) verändert, insbesondere der Rotor (2) eine im Wesentlichen kugelförmige oder kreiskegelförmige oder ellipsoidförmige oder urnenförmige Außenkontur (19) aufweist.

14. Windkraftmaschine nach einem der vorigen Ansprüche, wobei die Rotorflügel (6) des Rotormoduls (5) derart ausgebildet sind, dass bei einer Projektion des Rotormoduls (5) in der radialen Richtung ein radial innerer Bereich frei von einer Abdeckung durch die Rotorflügel (6) ist.

15. Rotormodul für eine Windkraftmaschine nach einem der vorigen Ansprüche.
